# EUROPÄISCHE PATENTANMELDUNG

(11) **EP 3 145 045 A2**
(43) Veröffentlichungstag der Anmeldung: **22.03.2017**
(21) Anmeldenummer: 16176947.6
(22) Anmeldetag: 29.06.2016
(51) Int. Cl.: H02J 7/14, A01B 71/06, B60L 1/00, B60L 11/14, B60L 11/02, B60L 11/18, B60L 15/20, B60K 6/48

(54) **LANDWIRTSCHAFTLICHES ARBEITSFAHRZEUG**

(30) Priorität: 16.09.2015 DE 102015115649
(71) Anmelder: CLAAS Tractor S.A.S., 78141 Vélizy-Villacoublay Cedex (FR)
(72) Erfinder: Hammar, Adberrahmane, 75015 Paris (FR)
(74) Vertreter: Budach, Steffen

(57) **Zusammenfassung**

Die vorliegende Erfindung betrifft ein landwirtschaftliches Arbeitsfahrzeug (1), insbesondere Traktor, mit einem Verbrennungsmotor (2), mit einer von dem Verbrennungsmotor (2) angetriebenen elektrischen Maschine (22) sowie einem elektrischen Mehrspannungssystem (21), welches von der generatorisch betreibbaren elektrischen Maschine (22) mit Energie versorgt wird, wobei das elektrische Mehrspannungssystem (22) gleichzeitig eine erste Nieder-Gleichspannung und eine zweite, von der ersten Nieder-Gleichspannung verschiedene Nieder-Gleichspannung bereitstellt, und dass an das Mehrspannungssystem (22) ein oder mehrere Verbraucher (25) angeschlossen sind, die mit der ersten Nieder-Gleichspannung betreibbar sind, sowie ein oder mehrere Verbraucher (29), die mit der zweiten Nieder-Gleichspannung betreibbar sind.

## Beschreibung

Die vorliegende Erfindung betrifft ein landwirtschaftliches Arbeitsfahrzeug, insbesondere Traktor, gemäß dem Oberbegriff des Anspruches 1.

Landwirtschaftliche Arbeitsfahrzeuge, insbesondere Traktoren, umfassen einen Verbrennungsmotor, welcher dem Antrieb des Arbeitsfahrzeugs sowie dem Betreiben von an das Arbeitsfahrzeug koppelbaren Arbeits- und Anbaugeräten dient. Darüber hinaus wird mittels des Verbrennungsmotors eine elektrische Maschine generatorisch angetrieben, um eine für den Betrieb von an dem Arbeitsfahrzeug vorgesehenen elektrischen Komponenten, wie Beleuchtung, Klimaanlage oder dergleichen, notwendige Versorgungsspannung bereitzustellen. Darüber hinausgehend ist es vorgesehen, landwirtschaftliche Arbeitsfahrzeuge zusätzlich mit einem Hochspannungssystem auszustatten, um mechanische oder hydraulische Aktoren durch elektrisch betriebene zu ersetzen.

Aus der EP 1 772 985 A2 ist ein landwirtschaftliches Arbeitsfahrzug der eingangs genannten Art bekannt, welches ein Mehrspannungssystem aufweist, dass mit einer Niederspannung und einer Hochspannung betrieben wird. Hierzu ist eine einzelne, generatorisch betriebene, elektrische Maschine vorgesehen, welche entweder die Niederspannung oder die Hochspannung bereitstellt. Die technischen Anforderungen an ein landwirtschaftliches Fahrzeug, welches mit einem Niederspannungs- und einem Hochspannungssystem ausgestattet ist, sind hoch, insbesondere was die Anforderungen an einzuhaltende Sicherheitsstandards im Umgang und Betrieb des Hochspannungssystems betrifft. Die Schaffung einheitlicher Standards für das Betreiben von Hochspannungssystemen an landwirtschaftlichen Arbeitsfahrzeugen ist bislang nicht abgeschlossen.

Ausgehend vom vorstehend genannten Stand der Technik ist es die Aufgabe der vorliegenden Erfindung, ein landwirtschaftliches Arbeitsfahrzeug mit einem Mehrspannungssystem bereitzustellen, welches ein breiteres Anwendungsspektrum ermöglicht, unter Berücksichtigung der bisher gültigen Sicherheitsstandards.

Diese Aufgabe wird erfindungsgemäß durch die Merkmale des Anspruches 1 gelöst.

Vorteilhafte Weiterbildungen sind Gegenstand der Unteransprüche.

Gemäß dem Anspruch 1 wird ein landwirtschaftliches Arbeitsfahrzeug, insbesondere Traktor, mit einem Verbrennungsmotor, mit einer von dem Verbrennungsmotor angetriebenen elektrischen Maschine sowie einem elektrischen Mehrspannungssystem, welches von der einen generatorisch betreibbaren elektrischen Maschine mit Energie versorgt wird, vorgeschlagen, welches dadurch gekennzeichnet ist, dass das elektrische Mehrspannungssystem gleichzeitig eine erste Nieder-Gleichspannung und eine zweite, von der ersten Nieder-Gleichspannung verschiedene Nieder-Gleichspannung bereitstellt, und dass an das Mehrspannungssystem ein oder mehrere Verbraucher angeschlossen sind, die mit der ersten Nieder-Gleichspannung betreibbar sind, sowie ein oder mehrere Verbraucher, die mit der zweiten Nieder-Gleichspannung betreibbar sind. Ein derartiges Mehrspannungssystem, welches mit Spannungen unterhalb von 60 V Gleichstrom arbeitet, bietet gegenüber dem genannten Stand der Technik den Vorteil einer einfachen Integration in das bestehende elektrische System des landwirtschaftlichen Arbeitsfahrzeuges. Die bestehenden Sicherheitsstandards für Spannungssysteme, die unterhalb von 60 V Gleichstrom betrieben werden, werden eingehalten, so dass die Umsetzung eines derartigen Mehrspannungssystems kostengünstig ist. Die permanente Bereitstellung beider Versorgungsspannungen in dem Mehrspannungssystem für die unterschiedlichen Verbraucher bietet mehr Flexibilität und mehr Möglichkeiten beim Betreiben des landwirtschaftlichen Fahrzeugs. Ein weiterer wesentlicher Vorteil des Mehrspannungssystems besteht in der Möglichkeit, aufgrund der höheren ersten Nieder-Gleichspannung bei Bedarf zusätzlich eine höhere elektrische Leistung bereitstellen zu können, die auf verschiedene Weise nutzbar ist.

Der elektrischen Maschine ist ein Gleichrichter nachgeordnet, welcher die von der elektrischen Maschine generierte Wechselspannung in eine Gleichspannung umwandelt. Die elektrische Maschine kann eine Wechselspannung bereitstellen, welche durch den Gleichrichter in die erste Nieder-Gleichspannung umgewandelt wird, welche größer ist, als die zweite Nieder-Gleichspannung.

Des Weiteren kann zur Bereitstellung der zweiten Nieder-Gleichspannung ein Gleichspannungswandler in das elektrische Mehrspannungssystem integriert sein. Das Umwandeln von der höheren ersten Nieder-Gleichspannung zu der niedrigeren zweiten Nieder-Gleichspannung zeichnet sich durch einen besseren Wirkungsgrad und eine geringere Wärmeerzeugung aus.

Dabei kann das elektrische Mehrspannungssystem eine erste Energiespeichereinheit umfassen, die mit der ersten Nieder-Gleichspannung betreibbar ist. Diese Energiespeichereinheit kann eine abrufbare Leistung bereitstellen, wenn der Verbrennungsmotor und die von diesem angetriebene elektrische Maschine inaktiv sind.

Zusätzlich kann das elektrische Mehrspannungssystem eine zweite Energiespeichereinheit umfassen, die mit der zweiten Nieder-Gleichspannung betreibbar ist. Dieser Energiespeicher stellt eine abrufbare Leistung bereit, um unabhängig von dem Betrieb des Verbrennungsmotors Funktionen des landwirtschaftlichen Fahrzeugs aufrecht zu erhalten. Dabei können die Leistung der ersten Energiespeichereinheit und der zweiten Energiespeichereinheit gemeinsam abrufbar sein.

Vorteilhafterweise kann das elektrische Mehrspannungssystem modular aufgebaut sein. Hierunter ist eine Aufteilung zumindest einiger der Komponenten des Mehrspannungssystems auf zwei oder mehr Baugruppen zu verstehen, die in das landwirtschaftliche Arbeitsfahrzeug integrierbar sind. Dies kann eine Nachrüstbarkeit von konventionellen landwirtschaftlichen Arbeitsfahrzeugen ermöglichen. So kann die elektrische Maschine eine erste Baugruppe bilden. Der Gleichrichter, der Gleichspannungswandler sowie die erste Energiespeichereinheit und die zweite Energiespeichereinheit können zumindest eine weitere Baugruppe bilden. Diese Baugruppen können räumlich zueinander beabstandet, unter Berücksichtigung des vorhandenen Bauraumes, in das Arbeitsfahrzeug integriert werden.

Insbesondere kann die erste Energiespeichereinheit als Lithium-Akkumulator ausgebildet sein. Dieser zeichnet sich durch eine hohe Energiedichte aus, so dass bei Bedarf von den Verbrauchern, die mit der ersten Nieder-Gleichspannung betrieben werden, unabhängig von dem Betriebszustand der elektrischen Maschine, die notwendige Leistung temporär abgerufen werden kann. Dies gestattet die Umsetzung einer Stop/Start-Automatik an dem landwirtschaftlichen Arbeitsfahrzeug, welche zu einer Reduzierung des Kraftstoffverbrauchs beitragen kann. Darüber hinaus ermöglichen es die erste und die zweite Energiespeichereinheit, durch Rekuperation rückgewinnbare elektrische Energie zu speichern. Die von der ersten und/oder zweiten Energiespeichereinheit bereitgestellte Leistung ermöglich es weiterhin, diese temporär zusätzlich zu der Antriebsleistung der Verbrennungsmotor bereitzustellen, wenn es eine Betriebssituation des Arbeitsfahrzeuges erforderlich werden lässt. So kann beispielsweise bei einem Betrieb des Verbrennungsmotors in einem niedrigen Drehzahlbereich die in der ersten und/oder zweiten Energiespeichereinheit gespeicherte Energie abgerufen werden, um ein für die Betriebssituation notwendiges Drehmoment bereitstellen zu können, ohne zuvor den Verbrennungsmotor auf ein höheres Drehzahlniveau anheben zu müssen.

Weiterhin kann die elektrische Maschine durch einen Riementrieb mit dem Verbrennungsmotor trieblich verbunden sein. Hierbei kann die elektrische Maschine unmittelbar benachbart zu dem Verbrennungsmotor angeordnet sein.

Bevorzugt können die erste Energiespeichereinheit und die zweite Energiespeichereinheit in einem gemeinsamen Gehäuse angeordnet sein. Dieses Gehäuse kann ein zweites Modul des Mehrspannungssystems bilden.

Darüber hinaus können in dem Gehäuse der Gleichrichter und der Gleichspannungswandler angeordnet sein. Somit können die wesentlichen Komponenten des Mehrspannungssystems zentral zusammengefasst sein, was eine Montage an dem Arbeitsfahrzeug vereinfacht.

Vorteilhafterweise kann das Arbeitsfahrzeug eine Steuereinheit umfassen, welche zur Bestimmung und Überwachung der Kapazitäten der ersten Energiespeichereinheit und der zweiten Energiespeichereinheit eingerichtet ist. Die Steuereinheit steuert den Lade- und Entladevorgang der ersten und der zweiten Energiespeichereinheit.

Hierzu kann die Steuereinheit dazu eingerichtet sein, einen von einem an dem Arbeitsfahrzeug befindlichen Verbraucher abrufbaren Leistungsbedarf zu quantifizieren und mit einem Leistungsistwert zu vergleichen, der von der Steuereinheit in Abhängigkeit von der Kapazität der ersten und/oder der zweiten Energiespeichereinheit bestimmt wird. So kann bei Stillstand des Arbeitsfahrzeugs wegen einer temporären Unterbrechung des Arbeitsbetriebes der Verbrennungsmotor abgeschaltet werden, während die insbesondere elektrischen Verbraucher, wie beispielsweise die Beleuchtung des Arbeitsfahrzeugs oder die Klimaanlage, entsprechend ihrer benötigten Betriebsspannung aus einer oder beiden Energiespeichereinheiten versorgt werden, um deren Betrieb für die Dauer der Unterbrechung aufrechterhalten zu können. Die Steuereinheit kann hierzu den Leistungsbedarf der jeweiligen Verbraucher bestimmen, beispielsweise anhand von in der Steuereinheit hinterlegten Daten, und vergleicht diesen mit dem Leistungsistwert. Hieraus ergibt sich der längst mögliche Zeitraum eines Betriebes der elektrischen Verbraucher unabhängig von dem Betriebszustand des Verbrennungsmotors. Des Weiteren kann die Steuereinheit dazu eingerichtet sein, bei Passieren eines unteren Grenzwertes des Ladezustandes der ersten und/oder der zweiten Energiespeichereinheit den Verbrennungsmotor selbsttätig zu starten, um den zuverlässigen Betrieb des Arbeitsfahrzeuges sicherzustellen. Weiterhin kann die Steuereinheit dazu eingerichtet sein, nichtelektrischen Verbrauchern bei Stillstand des Verbrennungsmotors eine mechanische Antriebsleistung für einen beschränkten Zeitraum zur Verfügung zu stellen. Dies kann ermöglicht werden, indem die Steuereinheit die elektrische Maschine ansteuert, um als Motor betrieben zu werden, die ihre dafür notwendige Antriebsleistung von der ersten und der zweiten Energiespeichereinheit bezieht.

Insbesondere kann die Steuereinheit dazu eingerichtet sein, während des laufenden Betriebes des Arbeitsfahrzeugs zumindest die in der ersten Energiespeichereinheit enthaltene Leistung abzurufen, um die aus der ersten Energiespeichereinheit abrufbare elektrische Leistung durch eine geeignete Ansteuerung der elektrischen Maschine in eine mechanische Leistung umzuwandeln. Hierbei kann die elektrische Maschine als Motor betrieben werden, welche ihre abgegebene mechanische Leistung mittels eines Riementriebes abgibt. Dies kann vorteilhaft für den Betrieb der Zapfwellensysteme genutzt werden. So kann in Abhängigkeit von der Massenträgheit eines an dem Front- oder Heckzapfwellensystem angeschlossenen Anbau- oder Arbeitsgerätes diese zusätzliche Leistung aus einer oder beiden Energiespeichereinheiten abgerufen werden, um das Massenträgheitsmoment bei Inbetriebnahme des Anbau- oder Arbeitsgerätes zu überwinden.

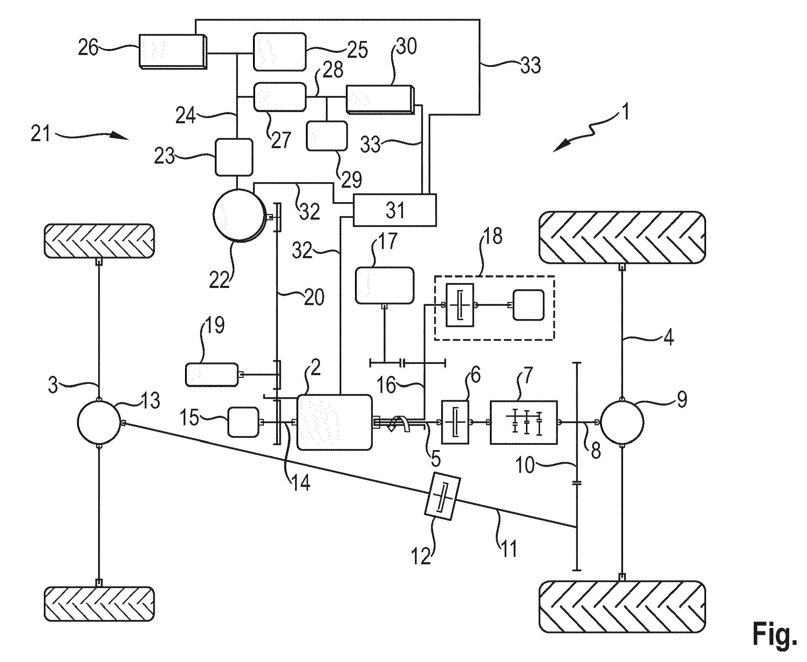

Die vorliegende Erfindung wird anhand eines in der einzigen Zeichnung dargestellten Ausführungsbeispiels näher erläutert.

Die Darstellung in der Fig. zeigt eine schematische Ansicht eines hybriden Antriebssystems eines als Traktor 1 ausgeführten landwirtschaftlichen Arbeitsfahrzeugs. Das Antriebssystem des Traktors 1 umfasst einen als Hauptantrieb ausgebildeten Verbrennungsmotor 2 sowie eine Vorderachse 3 und eine Hinterachse 4 mit daran montierten Rädern. Eine Getriebebaugruppe 7 ist, durch eine Kupplung 6 schaltbar, antriebsseitig durch eine Antriebswelle 5 mit dem Verbrennungsmotor 2 verbunden. Abtriebsseitig ist die Getriebebaugruppe 7 mit der Vorderachse 3 und der Hinterachse 4 verbunden, um die Antriebsleistung des Verbrennungsmotors 2 auf die Vorderachse 3 und Hinterachse 4 zu übertragen. Die Getriebebaugruppe 7 ist durch eine Abtriebswelle 8 mit einem auf der Hinterachse angeordneten Hinterachsdifferential 9 verbunden. Die Abtriebswelle 8 treibt eine Getriebestufe 10, die die Antriebsleistung mittels einer durch eine Kupplung 12 schaltbaren Welle 11 auf ein Vorderachsdifferential 13 überträgt, wenn der Traktor 1 im Allradbetrieb angetrieben werden soll.

Eine von dem Verbrennungsmotor 2 angetriebene Antriebswelle 14 treibt ein Frontzapfwellensystem 15 an, welches dem Betreiben von frontseitig an dem Traktor anbringbaren Anbau- oder Arbeitsgeräten dient. Mittels einer Getriebestufe 16 wird Antriebsleistung des Verbrennungsmotors 2 an ein Hydrauliksystem 17 des Traktors 1 sowie ein Heckzapfwellensystem 18 übertragen, welches ebenfalls dem Betreiben von an dem Traktor 1 anbringbaren Anbau- oder Arbeitsgeräten dient. Das Hydrauliksystem 18 speist unter anderem den oder die Hydraulikzylinder eines zumindest heckseitig angeordneten Dreipunkt-Krafthebers. Darüber hinaus kann das Hydrauliksystem 18 Hydraulikzylinder eines an dem Traktor 1 anbringbaren Frontladers oder sonstige an dem Traktor 1 anbringbare Arbeits- und Anbaugeräte speisen.

Der Verbrennungsmotor 2 treibt mittels eines Riemens einen Lüfter einer dem Verbrennungsmotor zugeordneten Kühleranordnung 19 an. Weiterhin ist ein Riementrieb 20 vorgesehen, der eine elektrische Maschine 22 trieblich mit dem Verbrennungsmotor 2 verbindet, um diese anzutreiben.

Die elektrische Maschine 22 wird generatorisch betrieben und stellt eine erste Nieder-Gleichspannung bereit, die in ein an dem Traktor 1 vorgesehenes Mehrspannungssystem 21 eingespeist wird. Hierzu ist der elektrischen Maschine 22 ein Gleichrichter 23 nachgeordnet, der die von der elektrischen Maschine 22 erzeugte Wechselspannung in die erste Nieder-Gleichspannung umwandet. Bevorzugt liegt die erste Nieder-Gleichspannung in einem Bereich größer 40 V und kleiner 60 Volt. Die erste Nieder-Gleichspannung wird mittels eines ersten Gleichspannungsbusses 24 an an diesen angeschlossene Verbraucher 25 des Traktors 1 übertragen, die mit der ersten Nieder-Gleichspannung betreibbar sind. Als mit der ersten Nieder-Gleichspannung betreibbare Verbraucher 25 kommen beispielsweise eine Klimaanlage, Scheinwerfer, insbesondere Xenon-Scheinwerfer, ein an dem Arbeitsfahrzeug 1 angeordneter Druckluftkompressor oder der Anlasser des als Traktor ausgeführten Arbeitsfahrzeuges 1 in Betracht. An den ersten Gleichspannungsbus 24 ist zudem eine erste Energiespeichereinheit 26 angeschlossen, welche als Lithiumakkumulator ausgeführt ist.

Weiterhin umfasst das Mehrspannungssystem 21 einen Gleichspannungswandler 27. Der Gleichspannungswandler 27 wandelt die höhere erste Nieder-Gleichspannung in eine niedrigere zweite Nieder-Gleichspannung um, deren Spannungswert 12 V beträgt. Die zweite Nieder-Gleichspannung dient dem Betrieb von Verbrauchern 29, für deren Betrieb die zweite Nieder-Gleichspannung benötigt wird. Beispielhaft seien als solche Verbraucher 29, die mit der zweiten Nieder-Gleichspannung betrieben werden, Scheibenwischermotoren, Scheibenwischwasserpumpen, Einbauradio oder eine Einrichtung zur Vorerwärmung von Harnstoff genannt. Diese Verbraucher 29 sind durch einen zweiten Gleichstrombus 28 untereinander verbunden. An diesen zweiten Gleichstrombus 28 ist eine zweite Energiespeichereinheit 30 angeschlossen, die beispielsweise als BleiAkkumulator ausgeführt sei kann.

Das Arbeitsfahrzeug 1 umfasst eine Steuereinheit 31, welche durch Signalleitungen 33 mit der ersten Energiespeichereinheit 26 und der zweiten Energiespeichereinheit 26 verbunden ist. Die Steuereinheit 31 ist zur Bestimmung und Überwachung der Kapazitäten der ersten Energiespeichereinheit 26 und der zweiten Energiespeichereinheit 30 eingerichtet. Des Weiteren steht die Steuereinheit 31 durch eine Steuer- und Signalleitung 32 mit dem Verbrennungsmotor 2, respektive dessen Motorsteuerungsmodul, sowie der elektrischen Maschine 22 in Verbindung. Die Steuereinheit 31 erhält auf diesem Weg Informationen über den aktuellen Betriebszustand des Verbrennungsmotors 2 und der elektrischen Maschine22. Weiterhin kann die Steuereinheit 31 mit den Verbrauchern 25, die an dem ersten Gleichstrombus 24 angeschlossen sind und mit den Verbrauchern 29, die an dem zweiten Gleichstrombus 28 angeschlossen sind, signal- und steuertechnisch verbunden sein.

Die Steuereinheit 31 ist dazu eingerichtet, einen von einem dem Arbeitsfahrzeug 1 zugeordneten elektrischen Verbraucher 25, 29 oder mechanischen Verbraucher 15, 17, 18 abrufbaren Leistungsbedarf zu quantifizieren und mit einem Leistungsistwert zu vergleichen. Der Leistungsistwert wird von der Steuereinheit 31 in Abhängigkeit von der jeweils aktuellen Kapazität der ersten Energiespeichereinheit 26 und/oder der zweiten Energiespeichereinheit 30 bestimmt. Bei Stillstand des Arbeitsfahrzeugs 1 wegen einer temporären Unterbrechung des Arbeitsbetriebes lässt sich der Verbrennungsmotor 2 durch eine Ansteuerung durch die Steuereinheit 31 vorübergehend abschalten, während die insbesondere elektrischen Verbraucher 25, 29, wie beispielsweise die Arbeitsbeleuchtung, Straßenfahrbeleuchtung oder Kabineninnenbeleuchtung des Arbeitsfahrzeugs 1 oder die Klimaanlage, entsprechend ihrer benötigten Betriebsspannung aus einer oder beiden Energiespeichereinheiten 26 und/oder 30 versorgt werden, um deren Betrieb für die Dauer der Unterbrechung aufrechtzuerhalten. Diese Stop-Start-Funktionalität trägt zu einer Verbrauchsreduzierung sowie zur einer Verringerung der Emissionen bei.

Die Steuereinheit 31 kann hierzu den Leistungsbedarf der jeweiligen aktiven elektrischen Verbraucher 25, 29 anhand von in der Steuereinheit 31 hinterlegbaren Leistungsdaten der elektrischen Verbraucher 25, 29 oder anhand von Messungen der Leistungsaufnahme bestimmen und diesen mit dem aktuellen Leistungsistwert des jeweiligen Energiespeichers 26, 30 vergleichen. Hieraus bestimmt die Steuereinheit 31 den längst möglichen Zeitraum eines Betriebes der aktiven elektrischen Verbraucher 25, 29 unabhängig von dem Betriebszustand des Verbrennungsmotors 2, das heißt nur durch Speisung mittels der ersten und zweiten Energiespeichereinheiten 26, 30. Die Steuereinheit 31 ist zudem dazu eingerichtet, bei Passieren eines unteren Grenzwertes des jeweiligen Ladezustandes der ersten Energiespeichereinheit 26 und/oder der zweiten Energiespeichereinheit 30 den Verbrennungsmotor 2 selbsttätig wieder zu starten, um den zuverlässigen Betrieb des Arbeitsfahrzeuges 1 sicherzustellen. Der Startvorgang des Verbrennungsmotors 2 lässt sich beschleunigen, wenn die elektrische Maschine 22 die Anlasserfunktion übernimmt.

Weiterhin ist die Steuereinheit 31 dazu eingerichtet, den nichtelektrischen Verbrauchern, das heißt den mechanisch oder hydraulisch angetriebenen Verbrauchern, wie dem Hydrauliksystem 17 oder dem Frontzapfwellensystem 15 beziehungsweise Heckzapfwellensystem 18 bei einem Stillstand des Verbrennungsmotors 2 eine mechanische Antriebsleistung für einen beschränkten Zeitraum zur Verfügung zu stellen. Dies wird dadurch ermöglicht, dass die Steuereinheit 31 die elektrische Maschine 22 ansteuert, um als Motor betrieben zu werden, die ihre dafür notwendige Antriebsleistung von der ersten Energiespeichereinheit 26 und der zweiten Energiespeichereinheit 30 bezieht. Die Bereitstellung mechanischer Antriebsleistung durch die elektrische Maschine 22 ist dabei durch den jeweiligen aktuellen Leistungsbedarf der nichtelektrischen Verbraucher begrenzt. Ein weiterer Aspekt bei einem Betreiben der nichtelektrischen Verbraucher besteht darin, dass sich bei einem entsprechenden Betrieb der nichtelektrischen Verbraucher, wie beispielsweise dem Absenken eines Frontladers, die frei werdende Energie rekupieren lässt.

Die Steuereinheit 31 ermöglicht eine Ansteuerung des Mehrspannungssystems 21 in der Weise, dass während des laufenden Betriebes des Arbeitsfahrzeugs 1 zumindest die in der ersten Energiespeichereinheit 26 enthaltene Leistung abrufbar ist, um die aus der ersten Energiespeichereinheit 26 abgerufene elektrische Leistung in eine mechanische Leistung umzuwandeln. Hierzu steuert die Steuereinheit 31 die elektrische Maschine 22 derart an, dass diese als Motor arbeitet. Die im motorischen Betrieb der elektrischen Maschine 22 bereitgestellte mechanische Leistung kann vorteilhaft für den Betrieb der Zapfwellensysteme 15 und/oder 18 genutzt werden. So kann in Abhängigkeit von der Massenträgheit eines an dem Front- oder Heckzapfwellensystem 15, 18 angeschlossenen Anbau- oder Arbeitsgerätes diese zusätzliche Leistung aus einer oder beiden Energiespeichereinheiten abgerufen werden, um das Massenträgheitsmoment bei Inbetriebnahme des Anbau- oder Arbeitsgerätes schneller zu überwinden. Darüber hinaus ergibt sich durch die zusätzlich abrufbare Leistung eine Verbesserung der Ansteuerung des Front- oder Heckzapfwellensystems 15, 18.

Die Steuereinheit 31 kann in einer Betriebssituation, in der aufgrund eines plötzlich erforderlichen zusätzlichen Leistungsbedarfs, beispielsweise das Anheben eines Frontladers, eine sprunghafte Drehzahlanpassung des Verbrennungsmotors 2 erforderlich wird, zur Kompensation dieses zusätzlichen Leistungsbedarfs diesen von einer oder beiden Energiespeichereinheiten 26, 30 abrufen, um durch die zusätzliche Leistung durch die als Motor betriebene elektrische Maschine 22 bereitstellen zu lassen. Auf diese Weise lässt sich eine Motordrückung vermeiden, so dass das Fahrverhalten sowie das Betriebsverhalten des Arbeitsfahrzeugs unbeeinflusst bleiben.

**Bezugszeichenliste**

| | | | |
|---|---|---|---|
| 1 | Traktor | 29 | Verbraucher |
| 2 | Verbrennungsmotor | 30 | Zweite Energiespeichereinheit |
| 3 | Vorderachse | 31 | Steuereinheit |
| 4 | Hinterachse | 32 | Signal- und Steuerleitung |
| 5 | Antriebswelle | 33 | Signalleitung |
| 6 | Kupplung | | |
| 7 | Getriebebaugruppe | | |
| 8 | Abtriebswelle | | |
| 9 | Hinterachsdifferential | | |
| 10 | Getriebestufe | | |
| 11 | Welle | | |
| 12 | Kupplung | | |
| 13 | Vorderachsdifferential | | |
| 14 | Antriebswelle | | |
| 15 | Frontzapfwel lensystem | | |
| 16 | Getriebestufe | | |
| 17 | Hydrauliksystem | | |
| 18 | Heckzapfwellensystem | | |
| 19 | Kühleranordnung | | |
| 20 | Riementrieb | | |
| 21 | Mehrspannungssystem | | |
| 22 | Elektrische Maschine | | |
| 23 | Gleichrichter | | |
| 24 | Erster Gleichspannungsbus | | |
| 25 | Verbraucher | | |
| 26 | Erste Energiespeichereinheit | | |
| 27 | Gleichspannungswandler | | |
| 28 | Zweiter Gleichspannungsbus | | |

## Patentansprüche

1. Landwirtschaftliches Arbeitsfahrzeug (1), insbesondere Traktor, mit einem Verbrennungsmotor (2), mit einer von dem Verbrennungsmotor (2) angetriebenen elektrischen Maschine (22) sowie einem elektrischen Mehrspannungssystem (21), welches von der generatorisch betreibbaren elektrischen Maschine (22) mit Energie versorgt wird, **dadurch gekennzeichnet, dass** das elektrische Mehrspannungssystem (22) gleichzeitig eine erste Nieder-Gleichspannung und eine zweite, von der ersten Nieder-Gleichspannung verschiedene Nieder-Gleichspannung bereitstellt, und dass an das Mehrspannungssystem (22) ein oder mehrere Verbraucher (25) angeschlossen sind, die mit der ersten Nieder-Gleichspannung betreibbar sind, sowie ein oder mehrere Verbraucher (29), die mit der zweiten Nieder-Gleichspannung betreibbar sind.

2. Arbeitsfahrzeug (1) nach Anspruch 1, **dadurch gekennzeichnet, dass** der elektrischen Maschine (22) ein Gleichrichter (23) nachgeordnet ist.

3. Arbeitsfahrzeug (1) nach einem der Ansprüche 1 oder 2, **dadurch gekennzeichnet, dass** zur Bereitstellung der zweiten Nieder-Gleichspannung ein Gleichspannungswandler (27) in das elektrische Mehrspannungssystem (21) integriert ist.

4. Arbeitsfahrzeug (1) nach einem der Ansprüche 1 bis 3, **dadurch gekennzeichnet, dass** das elektrische Mehrspannungssystem (21) eine erste Energiespeichereinheit (26) umfasst, die mit der ersten Nieder-Gleichspannung betreibbar ist.

5. Arbeitsfahrzeug (1) nach einem der Ansprüche 1 bis 4, **dadurch gekennzeichnet, dass** das elektrische Mehrspannungssystem (21) eine zweite Energiespeichereinheit (30) umfasst, die mit der zweiten Nieder-Gleichspannung betreibbar ist.

6. Arbeitsfahrzeug (1) nach einem der Ansprüche 1 bis 5, **dadurch gekennzeichnet, dass** das elektrische Mehrspannungssystem (21) modular aufgebaut ist.

7. Arbeitsfahrzeug (1) nach einem der Ansprüche 1 bis 6, **dadurch gekennzeichnet, dass** die erste Energiespeichereinheit (26) als Lithium-Akkumulator ausgebildet ist.

8. Arbeitsfahrzeug (1) nach einem der Ansprüche 1 bis 7, **dadurch gekennzeichnet, dass** die elektrische Maschine (22) durch einen Riementrieb (20) mit dem Verbrennungsmotor (2) trieblich verbunden ist.

9. Arbeitsfahrzeug (1) nach einem der Ansprüche 5 bis 8, **dadurch gekennzeichnet, dass** die erste Energiespeichereinheit (26) und die zweite Energiespeichereinheit (30) in einem gemeinsamen Gehäuse angeordnet sind.

10. Arbeitsfahrzeug (1) nach Anspruch 9, **dadurch gekennzeichnet, dass** in dem Gehäuse der Gleichrichter (23) und der Gleichspannungswandler (27) angeordnet sind.

11. Arbeitsfahrzeug (1) nach einem der Ansprüche 1 bis 10, **dadurch gekennzeichnet, dass** das Arbeitsfahrzeug (1) eine Steuereinheit (31) umfasst, welche zur Bestimmung und Überwachung der Kapazitäten der ersten Energiespeichereinheit( 26) und der zweiten Energiespeichereinheit (30) eingerichtet ist.

12. Arbeitsfahrzeug (1) nach Anspruch 11, **dadurch gekennzeichnet, dass** die Steuereinheit (31) dazu eingerichtet ist, einen von einem dem Arbeitsfahrzeug (1) zugeordneten Verbraucher abrufbaren Leistungsbedarf zu quantifizieren und mit einem Leistungsistwert zu vergleichen, der von der Steuereinheit (31) in Abhängigkeit von der Kapazität der ersten und/oder der zweiten Energiespeichereinheit (26, 30) bestimmt wird.

13. Arbeitsfahrzeug (1) nach einem der Ansprüche 11 oder 12, **dadurch gekennzeichnet, dass** die Steuereinheit (31) dazu eingerichtet ist, während des laufenden Betriebes des Arbeitsfahrzeugs (1) zumindest die in der ersten Energiespeichereinheit (26) enthaltene Leistung abzurufen, um die aus der ersten Energiespeichereinheit (26) abrufbare elektrische Leistung durch eine geeignete Ansteuerung der elektrischen Maschine (22) in eine mechanische Leistung umzuwandeln.
